**Europäisches Patentamt**

**European Patent Office**

**Office européen des brevets**

(11) Numéro de publication: **0 012 062**
**A1**

# (12) DEMANDE DE BREVET EUROPEEN

(21) Numéro de dépôt: **79400882.1**

(22) Date de dépôt: **16.11.79**

(51) Int. Cl.³: **A 01 K 97/06**

(30) Priorité: **17.11.78 FR 7832552**

(43) Date de publication de la demande:
**11.06.80 Bulletin 80/12**

(84) Etats Contractants Désignés:
**AT BE CH DE GB IT LU NL SE**

(71) Demandeur: **Martinet, René**
**51, Rue Jean Richepin**
**F-76620 Le Havre(FR)**

(71) Demandeur: **Meinerad, Luc**
**161, Rue Victor Hugo**
**F-76600 Le Havre(FR)**

(72) Inventeur: **Martinet, René**
**51, Rue Jean Richepin**
**F-76620 Le Havre(FR)**

(72) Inventeur: **Meinerad, Luc**
**161, Rue Victor Hugo**
**F-76600 Le Havre(FR)**

(74) Mandataire: **Fruchard, Guy et al,**
**CABINET CHEREAU Maximilianstrasse 15**
**D-8000 München 22(DE)**

(54) **Boîte de rangement pour cuillers de pêche.**

(57) Boîte de rangement pour cuillers de pêche comportant un corps (7), par exemple parallélépipédique, comprenant un série d'évidements (10) formés dans une de ses surfaces périphériques (9) et une série de paires de trous oblongs (12) formés dans une paroi adjacente et perpendiculaire aux surfaces susdites et destinés à recevoir, respectivement la hampe (3) et deux branches (2) d'un hameçon de cuiller et un couvercle (8) monté articulé sur le corps, pour sélectivement donner accès aux cuillers disposées sur le corps.

Dans un mode de réalisation particulier, le corps est cylindrique, ainsi que le couvercle, celui-ci présentant une lumière permettant de donner sélectivement accès à un secteur angulaire choisi du corps.

EP 0 012 062 A1

./...

# Fig : 1

La présente invention concerne une boîte à pêche, et plus particulièrement une boîte à cuillers.

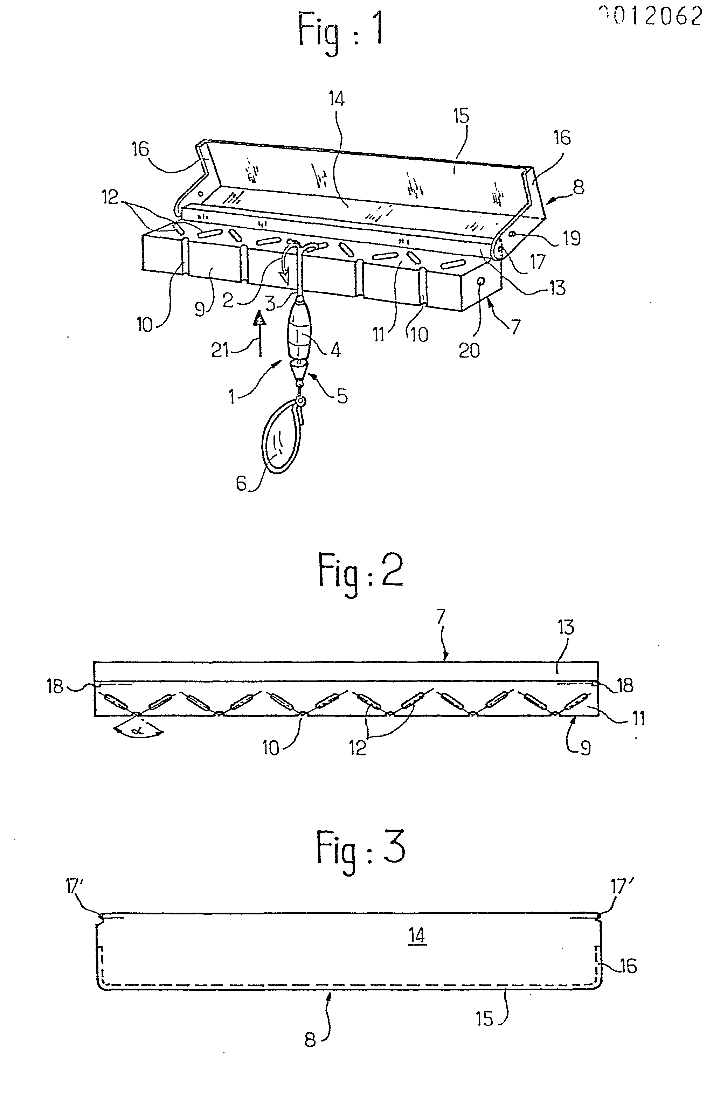

Les cuillers, très couramment utilisées pour la pêche au lancer, présentent une structure composite comprenant, comme on le voit sur la figure 1, une partie formant hameçon 2, à trois branches réunies en une hampe 3, prolongée par un lest réglable ou plomb 4, et, par l'intermédiaire d'un émerillon 5, par une palette 6, celle-ci étant agencée de façon à pouvoir tourner ou onduler dans l'eau pour constituer un leurre pour les espèces carnassières. Actuellement, les cuillers sont livrées en vrac dans des boîtes plastiques ou au détail. Lorsque le pêcheur veut prendre une de ces cuillers, qui sont généralement de trois ordres : n° 1, n° 2 et n° 3, ces cuillers sont le plus fréquemment emmêlées et l'utilisateur doit dégager la cuiller qu'il a choisie parmi un emmêlement souvent inextricable d'autres cuillers. Cette opération se traduit le plus souvent par des risques de chute —notamment dans l'eau— des cuillers emmêlées et par des piqûres parfois graves de l'utilisateur.

La présente invention a précisément pour objet d'obvier à ces inconvénients en proposant une boîte de rangement pour cuillers de construction simple, permettant un rangement rapide et ordonné des cuillers, sans risques de blessure pour l'utilisateur et se présentant sous la forme d'un dispositif compact, portatif, susceptible d'être pendu à la veste ou autour du cou de l'utilisateur.

Pour ce faire, selon une caractéristique de la présente invention, une telle boîte de rangement comprend un corps présentant au moins une surface périphérique et au moins un élément de paroi adjacent à cette surface périphérique et sensiblement perpendiculaire à celle-ci, la surface périphérique présentant une série de logements parallèles s'étendant dans la direction perpendiculaire à l'élément de paroi pour recevoir la hampe de l'hameçon de la cuiller, l'élément de paroi présentant, au voisinage de chaque logement, une paire de trous pour recevoir deux des branches de l'hameçon de la cuiller, et un couvercle monté de façon articulée sur le corps, comportant deux parois perpendiculaires entre elles formant un dos et un rabat, et susceptible d'être amené, dans au moins une position relative vis-à-vis du corps avec le dos s'étendant parallèlement à l'élément de paroi, à distance de celui-ci, et le rabat s'étendant parallèlement à la surface périphérique, à distance de celle-ci dans la direction opposée à l'élément de paroi.

Selon une caractéristique particulière de la présente invention, le corps présente une configuration sensiblement parallélépipédique, le couvercle étant monté articulé autour d'un axe parallèle à la direction principale du corps parallélépipédique.

Selon une autre caractéristique particulière de la présente invention, le corps est sensiblement cylindrique de révolutions, le couvercle ayant la forme d'une coupole cylindrique présentant une jupe recouvrant la périphérie du corps, le couvercle étant monté de façon à pouvoir tourner sur le corps autour de l'axe de celui-ci, une lumière étant formée dans le couvercle pour donner sélectivement accès à une zone limitée angulairement du corps voisine de la périphérie de celui-ci.

D'autres caractéristiques et avantages de la présente invention ressortiront de la description de modes de réalisation, donnés à titre illustratif mais nullement limitatif, faite en relation avec les dessins annexés, sur lesquels :

La figure 1 représente, de façon schématique en perspective, un premier mode de réalisation de la boîte de rangement selon la présente invention ;

Les figures 2 et 3 représentent, respectivement, en vue de dessus, le corps et le couvercle d'une variante de la boîte de rangement représentée sur la figure 1 ;

La figure 4 représente, de façon schématique, en vue de dessus, un second mode de réalisation de la boîte de rangement selon la présente invention, le couvercle de celle-ci étant supposé transparent ;

Les figures 5 et 6 représentent respectivement, en vue de face, le corps et le couvercle de la boîte représentée sur la figure 4 ;

La figure 7 représente, en vue de dessus, un troisième mode de réalisation de la boîte de rangement selon la présente invention ;

La figure 8 représente, en demi-coupe suivant la ligne 8-8, la boîte de la figure 7 ;

La figure 9 représente, en vue de dessus, le corps de la boîte représentée sur la figure 7 ;

La figure 10 est une demi-coupe suivant la ligne 10-10 du corps de la figure 9, équipé d'un carter de protection ;

La figure 11 représente, en vue de dessus, un autre mode de réalisation du couvercle pour la boîte représentée sur la figure 7 ;

La figure 12 est une demi-coupe, suivant la ligne 12-12, du couvercle de la figure 11 ; et

La figure 13 est une vue de dessus d'un autre mode de réalisation du corps de la boîte représentée sur la figure 7.

Dans le mode de réalisation représenté sur les figures 1 à 3, la boîte pour le rangement des cuillers 1 comporte un corps généralement référencé 7, et un couvercle, généralement référencé 8, monté de façon à pouvoir pivoter sur ce corps. Le corps 7 présente une configuration générale parallélépipédique, une de ses grandes faces latérales 9 comprenant une série de logements ou rainures 10, ayant une section en forme d'arc de cercle, de direction sensiblement perpendiculaire aux faces supérieure et inférieure du corps 7. La partie supérieure du corps 7 comprend une surface plane 11, perpendiculaire à la face latérale 9 et comportant une série de paires de trous 12, associées aux logements 10.

Comme on le voit mieux sur la figure 2, les trous 12 de chaque paire sont de forme oblongue pour correspondre aux différentes dimensions des hameçons de cuillers, les axes principaux des trous oblongs 12 étant espacés symétriquement par rapport au logement associé 10 d'un angle $\alpha$ égal à 120°, les extrémités des trous oblongs 12 adjacentes du logement correspondant 10 étant situées à une distance de ces derniers inférieure à la dimension normale des plus petits hameçons de cuillers.

De façon particulièrement avantageuse, la partie supérieure du corps 7 comprend une partie longitudinale 13 surélevée par rapport au plan de la face 11 et servant au montage articulé du couvercle 8. Celui-ci présente, de façon générale, une première paroi formant dos 14, une seconde paroi formant rabat 15, perpen-

4

diculaire à la première paroi 14, et deux joues latérales 16. Dans le mode de réalisation représenté sur la figure 1, les joues 16 comportent des pivots d'articulation 17 reçus dans des trous formés dans les faces frontales de la partie surélevée 13. Dans la variante représentée sur les figures 2 et 3, l'extrémité de la face 14 formant dos du couvercle comporte des éléments de pivot 17' destinés à être reçus dans des oeilletons 18 formés sur la face antérieure de la partie surélevée 13.

Dans l'un ou l'autre mode de réalisation, le rangement des cuillers s'effectue comme suit : l'utilisateur saisissant une cuiller par l'une des branches de l'hameçon, introduit les deux autres branches, équidistantes de 120°, dans une paire de trous 12, la hampe 3 de l'hameçon venant alors se loger dans le logement 10 associé. La hauteur du corps 7 est déterminée de façon à être légèrement inférieure à la longueur usuelle des hampes 3, mais supérieure à la longueur des parties rabattues des branches 2 de l'hameçon. De cette façon, en rabattant le couvercle 8 autour de l'axe formé par les éléments de pivot 17 ou 17', le dos 14, vient dans une position parallèle à la face 11, à légère distance de celle-ci, le rabat 15 venant dans une position parallèle à la face 9 du corps formé avec les logements 10, à une distance de celle-ci supérieure à la distance dont fait normalement saillie la branche libre 2 de l'hameçon introduit dans le corps 7. On obtient ainsi, en position fermée, une boîte de rangement dont émergent simplement les parties articulées non blessantes des cuillers (lest, palette), les parties d'hameçons et leurs ardillons étant maintenus inaccessibles du fait du couvercle 8. Celui-ci permet en outre d'éviter que les cuillers, disposées dans le corps 7, ne s'échappent de celui-ci, et ce, quelle que soit l'orientation de la boîte fermée. Pour maintenir le couvercle en position fermée, on peut prévoir des moyens coopérant sur celui-ci et sur le corps, par exemple sous la forme de tétons arrondis 19, formés sur les faces internes des joues 16 et coopérant avec des évidements 20, formés dans les faces frontales du corps 7.

Pour effectuer un changement de cuiller, l'utilisateur qui peut porter la boîte en sautoir ou attachée à sa veste, ouvre le couvercle 8, saisit la cuiller considérée par la branche d'hameçon libre 2 et soulève la cuiller dans le sens de la flèche 21, pour la dégager hors des trous 12 du corps 7.

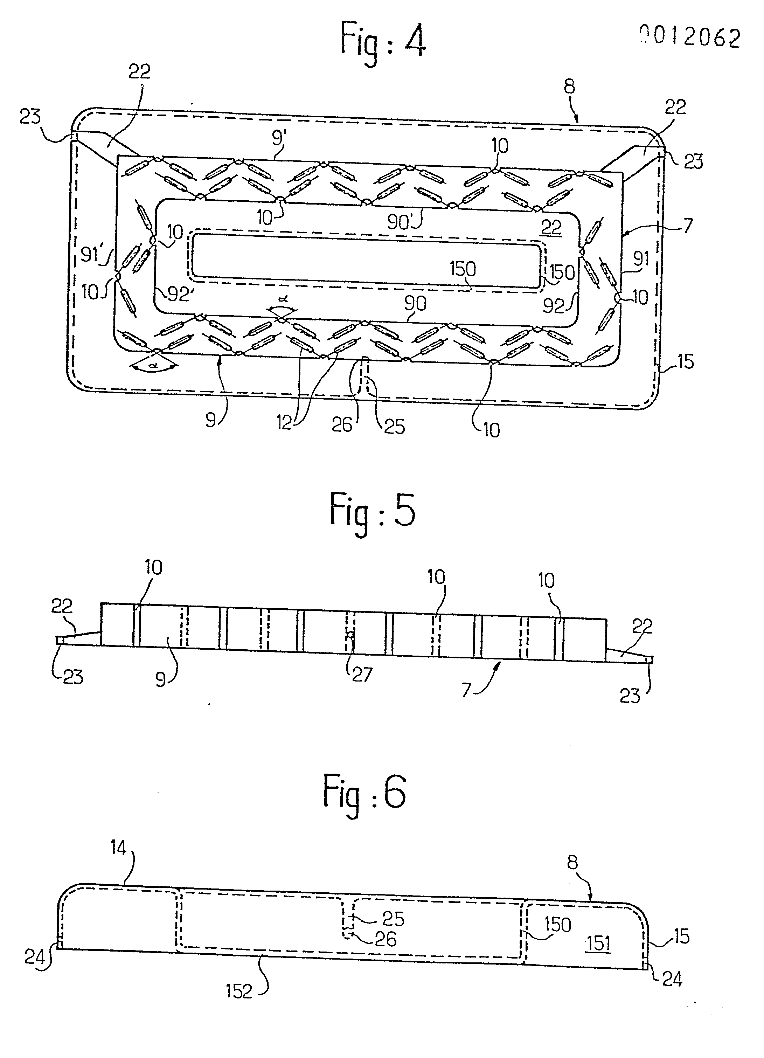

Dans le mode de réalisation représenté sur les figures 4 à 6, le corps 7 présente également une forme générale

parallélépipédique mais avec un évidement central rectangulaire 23, lui conférant la forme générale d'un tore à section rectangulaire ou carrée. Dans cette configuration, outre la grande face latérale 9, le corps 7 propose la grande face symétrique 9', les faces latérales longitudinales intérieures 90 et 90' du tore, et les faces frontales externes 91, 91', et les faces frontales internes 92, 92' pour la formation d'un grand nombre de logements ou de rainures 10 analogues à ceux du mode de réalisation représenté sur la figure 1. Comme dans ce premier mode de réalisation, à chaque logement 10 est associée une paire de trous oblongs 12 équidistants de 120°, symétriquement par rapport au logement 10 associé pour recevoir les branches de l'hameçon.

Dans ce mode de réalisation, le couvercle 8 présente également une forme générale parallélépipédique avec une plaque de sommet formant dos 14, et une jupe périphérique formant rabat 15 définissant quatre parois perpendiculaires deux à deux et orthogonales au plan de la plaque de sommet formant dos 14. En outre, le couvercle forme une seconde jupe interne 150 définissant des secondes parois orthogonales au plan de la plaque de sommet 14 et respectivement parallèles aux parois correspondantes de la jupe 15. La jupe 150 est avantageusement prolongée, à sa partie inférieure, par une plaque de fond 152 s'étendant sensiblement dans le plan du bord inférieur de la jupe 15, c'est-à-dire, en position fermée, sensiblement dans le plan inférieur du corps 7. Les jupes 15 et 150 définissent ainsi un espace annulaire de section rectangulaire 151 pour recevoir le corps 7, celui-ci étant, en position fermée du couvercle, totalement compris dans l'espace annulaire 151 formé par le couvercle.

Le corps 7 comporte, au voisinage des coins d'une de ses grandes faces latérales, deux bras 22 faisant saillie par rapport au corps dans deux directions orthogonales, c'est-à-dire sensiblement suivant deux des bissectrices des coins considérés. Les bras 22 sont terminés par des éléments de pivot 23, s'étendant dans une direction parallèle à la direction principale du corps parallélépipèdique 7 et destinés à être reçus dans des orifices formant paliers 24 ménagés dans les petites faces latérales en regard de la jupe extérieure 15 du couvercle 8. La grande face latérale de la jupe extérieure 15 du couvercle 8 comporte avantageusement un nervurage intérieur 25, prolongé par une protubérance 26 destinée à venir se loger dans un creux 27 formé dans la face correspondante 9 du corps 7 pour sélectivement maintenir le couvercle en position fermée. On comprendra que, dans ce mode de réalisation, il est possible de ranger un nombre notablement plus important de cuillers que dans le mode de réalisation représenté sur la figure 1, par exemple jusqu'à 26.

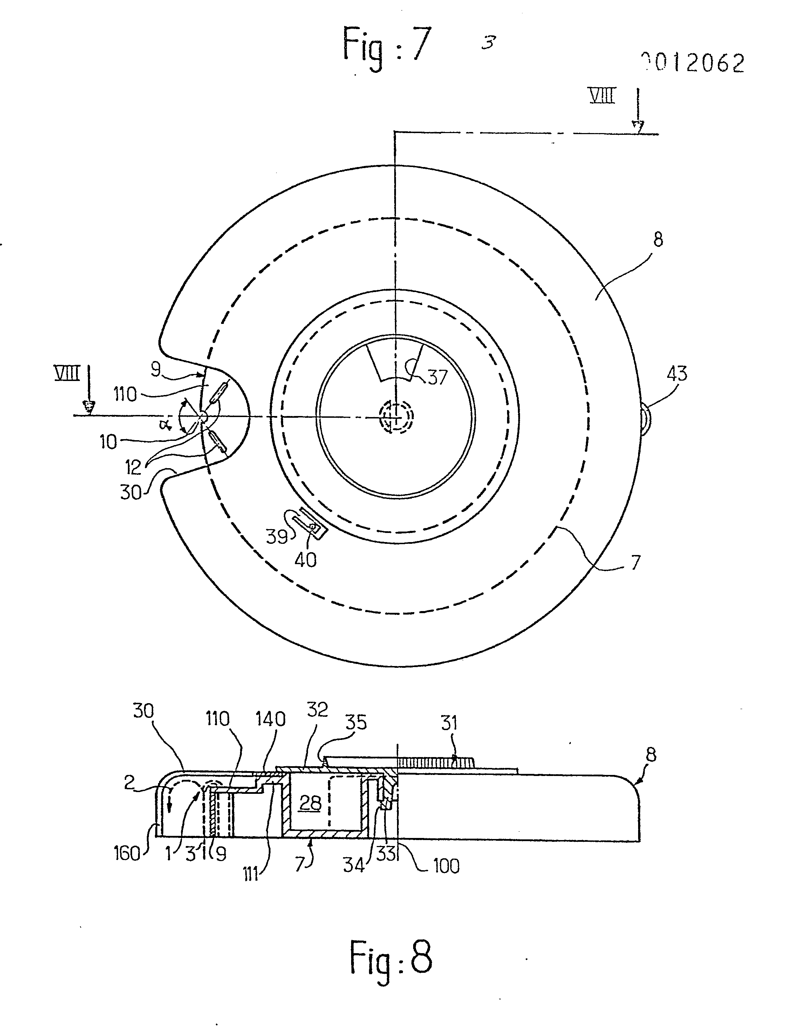

Les figures 7 à 13 représentent un autre mode de réalisation de la boîte de rangement selon la présente invention. Dans ce mode de réalisation le corps 7, présente une forme générale cylindrique droite avec une paroi périphérique cylindrique 9, et une surface annulaire plane 10, perpendiculaire à la paroi 9 et raccordant la paroi périphérique 9 à une partie centrale formant une chambre annulaire interne 28, ouverte en sa partie supérieure, et un élément de manchon définissant un alésage central 29. De façon plus spécifique, la surface annulaire 110 se raccorde à la partie centrale par une seconde paroi annulaire 111 s'étendant dans un plan parallèle à celui de la paroi annulaire 110 mais décalé légèrement de celui-ci vers le haut et définissant avec la partie centrale un épaulement 112. Cette seconde partie annulaire 111 et l'épaulement 112 agissent comme palier pour la paroi de sommet 140 du couvercle 8, qui se présente, dans ce mode de réalisation sous la forme, d'une coupelle cylindrique avec une paroi périphérique cylindrique 160 formant jupe, de hauteur au moins égale à l'épaisseur du corps 7.

Comme dans les modes de réalisation précédents, les évidements ou rainures 10 sont formés dans la paroi périphérique cylindrique 9, parallèles à l'axe de symétrie 100 du corps 7 et du couvercle 8, les ouvertures oblongues 12, écartées d'un angle α égal à 120° symétriquement par rapport à la direction radiale du logement 10 associé, étant formées dans la paroi annulaire 110. Une lumière 30, en forme de secteur circulaire, est pratiquée dans une zone périphérique du couvercle 8, à savoir, de façon plus spécifique, dans la partie formant dos 140 et dans la jupe 160, pour découvrir une partie de la périphérie du corps 7, correspondant, comme on le voit sur la figure 7, à un groupe de trous 12, et du logement 10 associé de façon à permettre l'insertion et l'extraction des cuillers dans le corps, les autres groupes de trous et de logements, recevant normalement d'autres cuillers, étant occultés et obturés par le couvercle 8.

Celui-ci est monté de façon à porter sur la seconde surface annulaire 111 et tourillonne sur le corps en étant centré par l'épaulement 112. Le couvercle est maintenu sur le corps par un élément de maintien, généralement référencé 31, comprenant une collerette 32, dont la périphérie recouvre légèrement le bord 0012062 interne de la paroi formant dos 140 du couvercle, et une partie centrale de fixation en saillie 33, reçue dans l'alésage 29 et comportant des becs de verrouillage 34, coopérant avec la paroi de l'alésage 29. L'élément de maintien 31 comporte également une partie externe cylindrique nervurée 35, servant à faire tourner l'élément de maintien comme on le verra plus loin.

En effet, conformément à une caractéristique plus particulière de la présente invention, la chambre annulaire interne 28 du corps 7 est divisée en un certain nombre de chambres individuelles $28_i$ par des cloisons radiales 36, une lumière 37, formée dans l'élément de maintien 31 donnant sélectivement accès aux chambres individuelles $28_i$. Avantageusement, une zone de la partie centrale ne comporte pas de chambre $28_i$ accessible et est obturée, pour ce faire, par une cloison supérieure 38 en regard de laquelle on amène la lumière 37, pour maintenir obturées les diverses chambres $28_i$, par exemple lors du transport de la boîte.

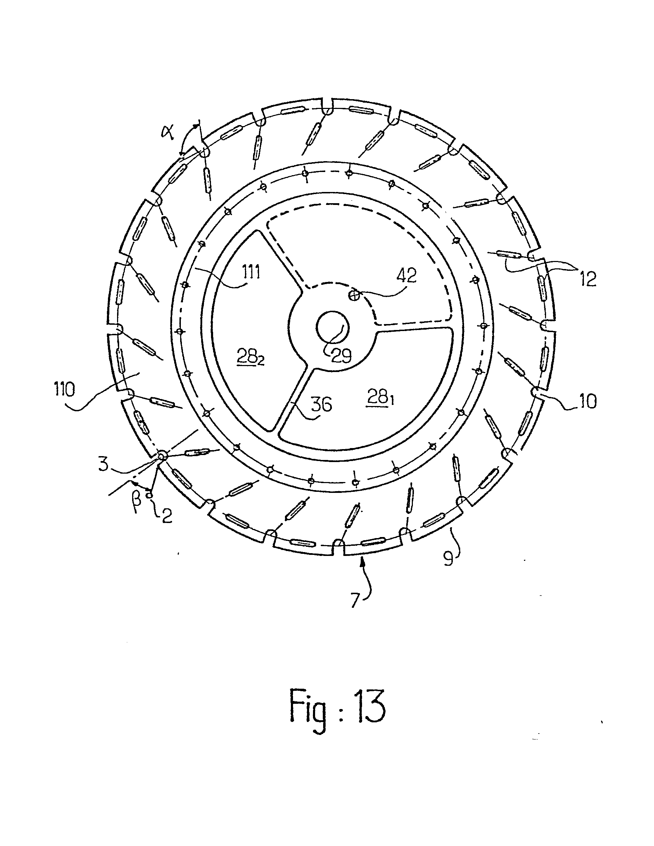

Dans le mode de réalisation représenté sur les figures 7 à 10, le corps 7 comporte des groupes de trous oblongs 12 et de logements 10 agencés avec les trous 12 disposés symétriquement par rapport à la direction radiale du logement 10 associé. Dans le mode de réalisation représenté sur la figure 13, les trous oblongs 12 d'une paire de trous associés à un logement 10 sont décalés angulairement de façon à être disposés symétriquement par rapport à une direction formant un angle $\beta$ compris entre 30 et 45°, avec la direction radiale du logement 10 associé. Dans cette configuration, la branche libre 2 de l'hameçon de la cuiller monté dans le corps 7 ne s'étend plus radialement, comme dans le mode de réalisation des figures 7 à 10, mais légèrement en biais, permettant ainsi de réduire les dimensions transversales hors tout de la boîte.

Dans l'un ou l'autre des modes de réalisation de la boîte cylindrique on prévoit avantageusement, sur le couvercle 8, une languette élastique 39, comportant sur sa face interne, une protubérance 40 destinée à coopérer avec une série de logements en creux 41, disposés circulairement, sur la seconde partie annulaire 111 du boîtier et espacés angulairement pour correspondre à la répartition des groupes de trous oblongs et de logements 10 sur la périphérie du corps. Ce système de verrouillage permet ainsi de bloquer le couvercle 8 dans une position angulaire telle que, la lumière 30 se trouve située à cheval entre deux cuillers, empêchant ainsi l'extraction de celles-ci et leur échappement hors de la boîte.

De façon similaire, l'élément de maintien 31 peut également comporter une languette élastique susceptible de coopérer avec un évidement en creux 42, formé dans la partie centrale du boîtier, pour verrouiller l'élément de maintien dans une position où la lumière 37 se trouve en regard de la paroi pleine supérieure 38, c'est-à-dire dans une position occultant toutes les chambres internes $28_i$. Celles-ci peuvent avantageusement être utilisées pour le rangement de plombs, d'émerillons, ou de palettes pour les cuillers.

De préférence, les éléments constitutifs de la boîte de rangement selon la présente invention sont réalisés en matière plastique moulée, par exemple en ABS, en polypropylène, ou en polyéthylène, au moins le couvercle, ainsi que de préférence, l'élément de maintien, étant réalisé en matière plastique transparente. Comme représenté sur la figure 7, au moins l'un des éléments constitutifs comprend une boucle d'accrochage 43, formée d'une seule pièce avec l'élément associé pour permettre le port ou l'accrochage de la boîte.

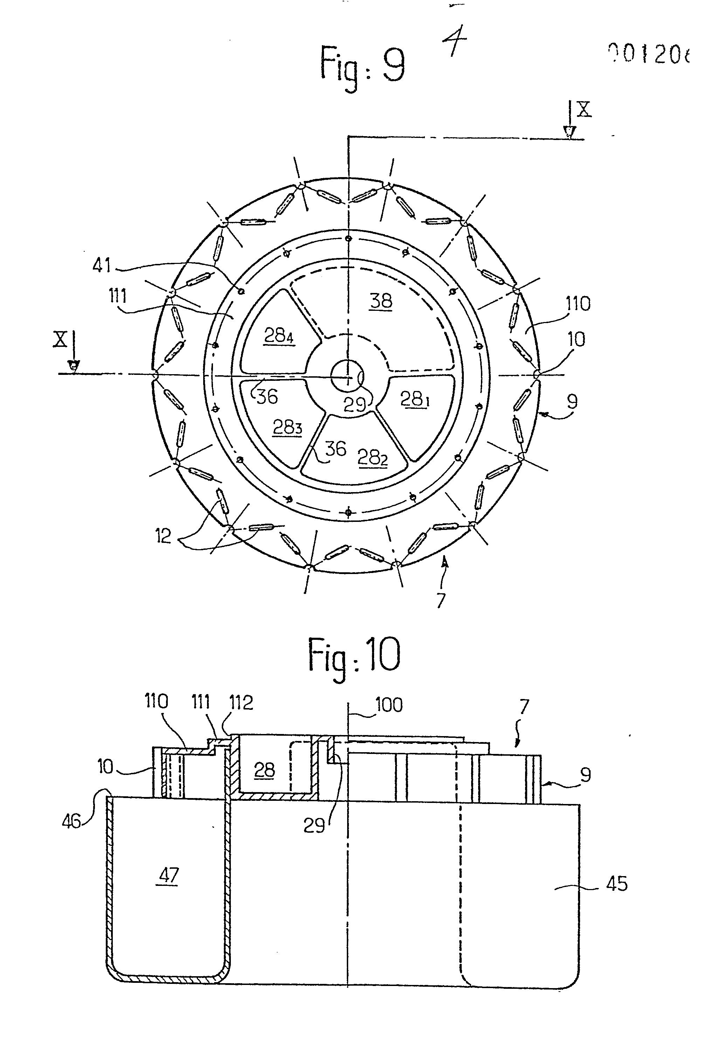

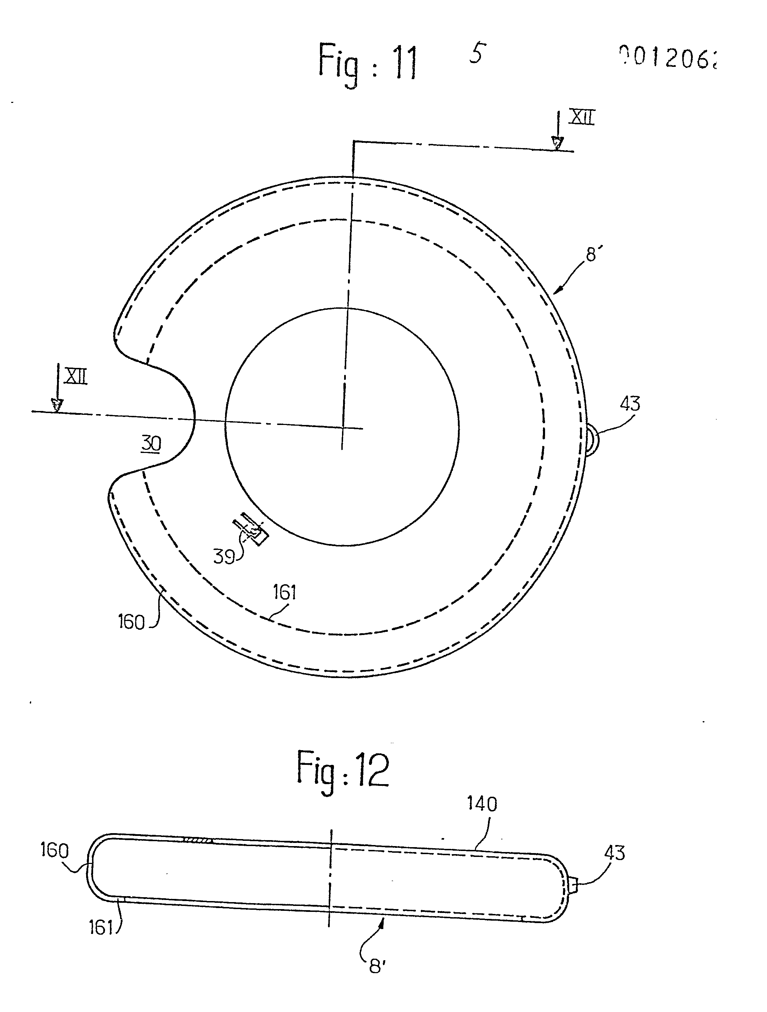

Quoique la présente invention ait été décrite en relation avec des modes de réalisation particuliers, elle ne s'en trouve pas limitée mais est au contraire susceptible de modifications et de variantes qui apparaîtront à l'homme de l'art. En particulier, comme représenté sur les figures 11 et 12, le couvercle 8' peut comprendre, à l'extrémité de la jupe 160, une collerette 161 rabattue radialement vers l'intérieur, offrant ainsi une meilleure protection et une meilleure sécurité pour l'utilisateur. En variante, comme représenté sur la figure 10, on peut prévoir en outre un carter cylindrique 45 de même diamètre que la jupe 160 et susceptible d'être rapporté sur la partie inférieure du corps 7, par exemple emmanché sur la périphérie de la partie centrale du corps 7 définissant les chambres $28_i$, avec le bord supérieur annulaire du carter en regard du bord annulaire inférieur de la jupe 160. Ce carter définit ainsi, au-dessous du corps 7, une chambre annulaire susceptible de recevoir et de protéger les parties pendantes (plombs, palettes) des cuillers installées sur le corps 7. Avec cet agencement, la boîte de rangement se transforme en une boîte magasin fermée, permettant un stockage convenable et aisé des cuillers.

REVENDICATIONS

1 - Boîte de rangement pour cuillers de pêche, caractérisée en ce qu'elle comprend : un corps présentant au moins une surface périphérique et au moins un élément de paroi, adjacent à cette surface périphérique et sensiblement perpendiculaire à celle-ci, la surface périphérique présentant une série de logements parallèles entre eux, s'étendant dans la direction sensiblement perpendiculaire à l'élément de paroi pour recevoir la hampe de l'hameçon d'une cuiller, l'élément de paroi présentant, au voisinage de chaque logement, une paire de trous pour recevoir deux des branches de l'hameçon de la cuiller ; et, un couvercle monté articulé sur le corps, comportant deux parois perpendiculaires entre elles formant un dos et un rabat et susceptibles d'être amenées dans au moins une position relative du couvercle vis-à-vis du corps, avec le dos s'étendant sensiblement parallèlement à l'élément de paroi, à distance de celui-ci, et le rabat s'étendant parallèlement à la surface périphérique, à distance de celle-ci dans la direction opposée à l'élément de paroi.

2 - Boîte de rangement selon la revendication 1, caractérisée en ce que les trous sont disposés à 120° l'un de l'autre par rapport au logement associé, lequel est constitué d'une rainure cylindrique formée en creux dans la surface périphérique.

3 - Boîte de rangement selon la revendication 1 ou la revendication 2, caractérisée en ce que les trous sont oblongs, les axes des trous d'une paire de trous se rencontrant sensiblement au centre du logement associé.

4 - Boîte de rangement selon l'une quelconque des revendications 1 à 3, caractérisée en ce que le corps est sensiblement parallèlépipédique, la surface périphérique étant au moins une des grandes faces latérales du corps, et l'élément de paroi étant une des faces adjacentes du corps le couvercle étant monté articulé sur le corps autour d'un axe parallèle à la direction principale du corps.

5 - Boîte de rangement selon la revendication 4, caractérisée en ce que le corps a sensiblement la forme d'un anneau rectangulaire, à section rectangulaire, définissant un évidement interne sensiblement rectangulaire, les logements étant formés sur les faces latérales internes et externes du corps, le couvercle ayant une forme générale parallèlépipédique et comprenant une plaque de sommet sensiblement plane, des premières parois perpendiculaires à la plaque sur la périphérie de celle-ci, et des secondes parois perpendiculaires à la plaque, parallèles aux premières parois et définissant respectivement avec ces dernières une chambre rectangulaire pour recevoir le corps en forme d'anneau.

6 - Boîte de rangement selon la revendication 5, caractérisée en ce que le couvercle est articulé sur des bras solidaires du corps et faisant saillie en déport par rapport à celui-ci.

7 - Boîte de rangement selon l'une quelconque des revendications 1 à 3, caractérisée en ce que le corps est sensiblement cylindrique de révolution, le couvercle ayant la forme générale d'une coupelle cylindrique avec une partie de dos annulaire et une jupe cylindrique recouvrant le corps, le couvercle étant monté de façon à pouvoir tourner sur le corps autour de l'axe de celui-ci, une lumière étant formée dans le couvercle pour donner sélectivement accès à une zone limitée angulairement du corps voisine de la périphérie de celui-ci.

8 - Boîte de rangement selon la revendication 7, caractérisée en ce que le couvercle, comporte un dos annulaire monté de façon à tourillonner sur une partie centrale du corps le couvercle étant maintenu de façon à pouvoir tourner sur le corps par un élément de maintien central, monté de façon détachable et de façon à pouvoir tourner sur le corps.

9 - Boîte de rangement selon la revendication 7 ou la revendication 8, caractérisée en ce que le corps et le couvercle comportent des moyens coopérants de blocage élastique pour bloquer de façon déverrouillable le couvercle dans une position angulaire relative vis-à-vis du corps correspondant à une position où la lumière ne se trouve pas à l'aplomb d'un des groupes formés d'un logement et de la paire de trous associée.

10 - Boîte de rangement selon la revendication 8 ou la revendication 9, caractérisée en ce que le corps comporte des chambres internes cloisonnées radialement et sélectivement obturables par l'élément de maintien, une seconde lumière étant formée dans cet élément de maintien pour donner sélectivement accès à ces chambres par rotation de l'élément de maintien.

11 - Boîte de rangement selon l'une quelconque des revendications 1 à 10, caractérisée en ce que le corps et le couvercle sont réalisés en matière plastique.

12 - Boîte de rangement selon la revendication 11, caractérisée en ce qu'au moins le couvercle est réalisé en matière plastique transparente.

Fig : 1

9012062

Fig : 2

Fig : 3

0012062

**Fig : 4**

**Fig : 5**

**Fig : 6**

Fig : 7    3    0012062

Fig : 8

# Fig: 9

# Fig: 10

Fig : 11    5    0012062

XII

8'

XII

30

43

39

161

160

Fig : 12

140

160

43

161

8'

Fig : 13

# RAPPORT DE RECHERCHE EUROPEENNE

Office européen des brevets

Numéro de la demande: 0012062

EP 79 40 0882

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernee | |
| | US - A - 4 073 085 (STREMECKUS)<br>* Colonne 2, ligne 55 - colonne 3, ligne 32 *<br>-- | 1 | A 01 K 97/06 |
| | US - A - 4 033 648 (LOPEZ-CEDERO)<br>* Colonne 2, ligne 28 - colonne 3, ligne 50 *<br>-- | 1,4,11-12 | |
| | US - A - 3 512 295 (LA BARGE)<br>* Colonne 3, lignes 4-60 *<br>-- | 1,11 | DOMAINES TECHNIQUES RECHERCHES (Int. Cl. 3) |
| | US - A - 2 447 105 (VOGEL)<br>* Colonne 1, ligne 46 - colonne 3, ligne 51 *<br>-- | 1,4,11 | A 01 K |
| | US - A - 2 865 128 (FALLERT)<br>* Colonne 2, lignes 16-64; figures 3,4 *<br>-- | 1 | |
| | US - A - 3 332 164 (PARRETT)<br>* Colonne 2, ligne 12 - colonne 3, ligne 5 *<br>-- | 1 | CATEGORIE DES DOCUMENTS CITES<br><br>X: particulièrement pertinent<br>A: arrière-plan technologique<br>O: divulgation non-ecrite<br>P: document intercalaire<br>T: théorie ou principe à la base de l'invention<br>E: demande faisant interference<br>D: document cite dans la demande<br>L: document cité pour d'autres raisons |
| | US - A - 3 022 600 (GLASCOFF)<br>* Colonne 2, ligne 11 - colonne 4, ligne 14 *<br>--<br>./. | 7,10 | &: membre de la même famille, document correspondant |

Le présent rapport de recherche a été établi pour toutes les revendications

| Lieu de la recherche | Date d'achevement de la recherche | Examinateur |
|---|---|---|
| La Haye | 22-02-1980 | CRUCHTEN |

OEB Form 1503.1 06.78

Office européen
des brevets

**RAPPORT DE RECHERCHE EUROPEENNE**

Numéro de la demande
0012062

EP 79 40 0882

-2-

| | **DOCUMENTS CONSIDERES COMME PERTINENTS** | | **CLASSEMENT DE LA DEMANDE** (Int. Cl. ³) |
|---|---|---|---|
| Catégorie | Citation du document avec indication, en cas de besoin, des parties pertinentes | Revendication concernée | |
| | US - A - 2 734 306 (HOLDEMAN)<br>* Colonne 1, ligne 68 - colonne 4, ligne 38 *<br><br>---- | 7,8,10 12 | |
| | | | **DOMAINES TECHNIQUES RECHERCHES** (Int. Cl. ³) |